# EUROPEAN PATENT APPLICATION

(11) **EP 3 808 615 A1**
(43) Date of publication of application: **21.04.2021**
(21) Application number: 20201452.8
(22) Date of filing: 13.10.2020
(51) Int. Cl.: B60S 3/04

(54) **DEVICE FOR WASHING WHEELS**

(30) Priority: 14.10.2019 ES 201930905
(71) Applicant: Istobal, S.A., 46250 La Alcudia (Valencia) (ES)
(72) Inventor: TOMAS PUCHADES, Yolanda, 46250 LA ALCUDIA (Valencia) (ES)
(74) Representative: Ungria López, Javier

(57) **Abstract**

The device is adaptable to the size of the rim of the wheel to be cleaned. The device comprises a drive shaft (2) connected to a drive (6), joined to a central cleaning element (16) of a cleaning assembly (13) which also comprises secondary cleaning elements (17). The device has a first scissor mechanism which moves the drive shaft (2) in a direction parallel to the ground, increasing or decreasing the distance between the drive shaft (2) and the ground until the drive shaft (2) is oriented facing the centre of the wheel. The device has a second scissor mechanism, connected to the secondary cleaning elements (17), which moves in a synchronised and dependent manner with respect to the first mechanism and is configured to increase or decrease the diameter of the cleaning assembly (13), moving the secondary cleaning elements (17) in a direction transverse to the drive shaft (2).

## Description

### OBJECT OF THE INVENTION

As expressed in the title of this specification, the present invention relates to a device for washing wheels that is adaptable to the diameter of the rim of the vehicle, particularly for automatic washing machines.

### TECHNICAL PROBLEM TO BE RESOLVED AND BACKGROUND OF THE INVENTION

In the technical field of vehicle washing, the removal of tar sludge, deicing salts, brake dust, insects, and other similar residues, particularly from vehicle rims, is known to be difficult. This is due to the fact that, today, the geometry of said rims becomes more and more complex, comprising various surfaces that are hard to access for cleaning.

Moreover, there are two clear trends in the automotive sector, on one hand, the manufacturing of large vehicles, such as SUV-type vehicles, and on the other hand, the manufacturing of small urban vehicles, such as the emerging electric vehicles, for example. In addition to the volume of the vehicle, an essential difference between vehicles of these two trends is the variety in the diameter of the rims.

Devices for washing wheels equipped with one or more rotating brushes in charge of washing the spokes of the rims are proposed in the art today. Generally, these devices are integrated in washing facilities, typically move with the movement of the washing gantry or tunnel, and interact with detection systems, such as photocells or light barriers which detect the presence of the wheel and a correct position of the device with respect to the wheel. When a correct positioning has been detected, the pre-established cleaning operation is activated.

The technical problem that arises due to the large variety of rim sizes coexisting on the market is that current cleaning devices cannot be adapted to rims with such different sizes. In order to solve this drawback, the state of the art proposes washing devices equipped with rotating brushes with a very large diameter, similar to the diameter of the largest rim to be washed, or with longer bristles, as described in patent KR100732996. Clearly, these solutions are inefficient because large brushes have a very high cost. Furthermore, from a construction viewpoint, a brush with large dimensions has significant moment of inertia and requires handling and braking elements with a suitable size.

Alternatively, the state of the art proposes devices for washing wheels wherein the rotating cleaning brush has a shifted drive shaft. This shaft eccentrically rotates and washes surfaces that are larger than the very diameter thereof, as described in patent WO2018184691. Also in this case, the size of the handling elements, braking elements, and support systems is fundamental for the eccentric rotation to not cause torsion loads that are too high.

Sometimes, in order to obtain a better result, the brushes for cleaning wheel rims perform operations to change the direction of rotation so as to better reach all the spaces. This movement is performed while the brush is resting on the rim.

The state of the art closest to the present invention describes patents adapting the size thereof to the diameter of the wheel.

In that sense, for example, patent DE3740627 describes a device for washing wheels which adapts to the diameter of the rim by means of a plurality of brushing elements separated from the centre of a main scrubbing disc. This plurality of additional brushes has longer bristles and the brushes are secured to the main disc by means of a flexible element which enables the brush to adapt to the contour of the wheel.

The device described above has the drawback that the increase in diameter is not compensated by the shaft of the disc, for which reason although the diameter of the washing area increases, it is not centred with the diameter of the wheel. Therefore, the washing performed is inefficient due to the fact that the entirety of the rim is not reached. Furthermore, the joining elements between the main brush and the additional brushes must withstand significant fatigue stresses.

Another document describing the concept of adapting the system for washing wheels to the diameter of the rim is disclosed in patent KR101098889. The device described in said patent has a main plate articulated to at least one connector part connecting a brush crown. Said brush crown opens when it exerts pressure on the vehicle rim. To return to the original state thereof, the device has a spring drawing back the connecting part when the brushes no longer exert pressure.

This device improves the robustness of the assembly described previously in patent DE3740627. However, it does not solve the problem of compensation for the wheel height, since the reference for position control is taken from the centre of the rim and not from the lower portion of the rim. Likewise, the need to rest on specific points on the rim of the vehicle in order to exert suitable pressure on the rim for the purpose of opening the brush crown entails a drawback for rims with spokes that are spaced apart.

A solution for the devices described above would consist of including an additional drive which would modify the height of the centre of the device, thereby compensating for the height of the wheel with respect to the extended diameter, as described in patents EP2332793 and US7582164. The first of said patents consists of a wheel-washing device that can be moved in three axes by means of thrust drives. The patent has the limitation of not enabling the diameter of the brush to be adapted to the wheel, for which reason it does not solve the problems existing in the state of the art. The second patent describes a system for washing wheels using high-pressure water which enables the centre of the nozzle to be adjusted to the height of the centre of the wheel. The patent also enables the water projection radius to be increased or decreased depending on the diameter of the rim by moving the nozzle closer or away. The height of the centre of the nozzle and the rim is thereby compensated with the projection radius.

The present invention seeks to solve the mentioned problems of providing a system for washing wheels which enables rims with both small and large diameters to be washed by means of a device which enables the diameter to be adapted, compensating for the height, and performing the scrubbing by means of rotary friction, by means of a single drive.

### DESCRIPTION OF THE INVENTION

To achieve the objectives and to avoid the drawbacks mentioned in the preceding sections, the invention proposes a device for washing vehicle wheels in automatic cleaning machines which enables the size of the brush to be adapted to different wheel diameters, compensating for the height during the opening of the brush by taking as a reference the ground of the facility, and scrubbing the brush against the rim, all this with a single drive.

The device of the invention comprises a supporting base which is preferably located inside a column of the washing machine wherein it is installed. Said base is the support for the rest of the elements of the device.

The cleaning assembly of the device comprises at least one main cleaning element, arranged at the end of a drive shaft connected to a drive, and secondary cleaning elements. The secondary cleaning elements are capable of moving with respect to the main cleaning element, moving away or closer thereto in order to increase or decrease the diameter of the cleaning assembly. In this manner, the entire surface of the rim can therefore be covered by means of the rotation of the cleaning assembly, regardless of the diameter thereof. The cleaning elements are elements which clean by friction and are preferably brushes.

To compensate for the increase in diameter of the cleaning assembly formed by cleaning elements which can be brushes, the device also changes the height at which the cleaning assembly is positioned with respect to the ground.

The change in position of the cleaning assembly is performed by means of a first scissor mechanism and the change in diameter of the cleaning assembly is performed by means of a second scissor mechanism. Both mechanisms work in a synchronised manner to enable a correct adaptation of the device to the size of each wheel.

The device moves between a minimum opening position, wherein the distance from the drive shaft to the ground is decreased, compensating for the minimum opening diameter of the cleaning assembly (i.e., it is the position suitable for cleaning a small wheel), and a maximum opening end position wherein the distance from the drive shaft of the device to the ground is increased, compensating for the maximum opening diameter of the brush (i.e., it is the position suitable for cleaning a large wheel). Likewise, the brush can adapt to and be used in any intermediate position between said minimum and maximum opening positions.

A single drive is in charge of performing the movement required for performing the three actions enabled by the device, i.e., diameter adaptation, height compensation, and rotation for scrubbing.

The first scissor mechanism comprises a fixed extender arm anchored to the base of the device, and a movable extender arm which is capable of moving along a guide housed in the base, both arms being articulated to one another. This first scissor mechanism works in a plane perpendicular to the plane of the advance direction of the washing machine, parallel to the ground. The movement of the scissor mechanism is therefore always oriented towards the wheel of the vehicle.

Preferably, two detection elements which enable the maximum path of the first scissor mechanism to be established are arranged in the base. In other words, they delimit the path between the minimum opening position and the maximum opening position.

The fixed extender arm includes a support for the drive of the device such that a fixed joint always exists between the base and the drive. Furthermore, the drive is connected to the drive shaft at the end of which the main cleaning element is arranged, and is in charge of controlling the movement thereof, which in a preferred embodiment is a rotational movement about the longitudinal axis thereof. In this case, the movable extender arm is joined to a nut which moves in a threaded section of the drive shaft, thereby linking the first scissor mechanism and the drive shaft.

The second scissor mechanism is linked to the drive shaft and joined to the secondary cleaning elements. More specifically, it comprises support arms, which are joined to a movable hub, in turn joined to the nut described above, and which are joined, through supports, to the secondary cleaning elements. Likewise, the second scissor mechanism comprises additional extender arms, joined in an articulated manner to the support arms and to a fixed hub arranged in the drive shaft.

Since the support arm contains a fixed anchoring point for anchoring to the support of the secondary cleaning element, and a movable anchoring point in the opposite portion (movable hub), the advancement of the nut on the drive shaft causes the opening of the half-brush connected to the support arm, directed by the additional extender arm.

A guide support cube, rotating in accordance with the drive shaft, is arranged at one end of the drive shaft. Guide rods are joined to said guide cube (one for each of the secondary cleaning elements). Said guide rods direct the movement of the corresponding support of the secondary cleaning element, moving it away from the drive shaft, therefore increasing the diameter of the area being scrubbed.

Another additional advantage of the present invention is that the support base can be assembled above the axis of rotation (drive shaft) or below the axis of rotation (drive shaft). The device works efficiently in both cases.

When the support base is assembled above the drive shaft, the extension movement of the first scissor mechanism involves a downward movement of the drive shaft, i.e., the distance from the drive shaft to the ground decreases (a position suitable for small wheels). In this case, when the first scissor mechanism is collapsed, the drive shaft moves upwards, increasing the distance between the drive shaft and the ground (a position suitable for large wheels).

When the support base is assembled below the drive shaft, the extension movement of the first scissor mechanism involves an upward movement of the drive shaft, i.e., the distance from the drive shaft to the ground increases (a position suitable for large wheels). In this case, when the first scissor mechanism is collapsed, the drive shaft moves downwards, decreasing the distance between the drive shaft and the ground (a position suitable for small wheels).

### BRIEF DESCRIPTION OF THE FIGURES

Next, to help better understand this specification and as an integral part thereof, a series of figures is attached in which the object of the invention is depicted in an illustrative and non-limiting manner.
Figure 1 shows a profile view of the device for washing wheels in the minimum opening position, coinciding with the minimum diameter position of the cleaning element.
Figure 2 shows a perspective view of the device for washing wheels in the minimum opening position.
Figure 3 shows a profile view of the device for washing wheels in the maximum opening position, coinciding with the maximum diameter position of the cleaning element.
Figure 4 shows a perspective view of the device for washing wheels in the maximum opening position.
Figure 5 shows a perspective view of an embodiment of the device for washing wheels, wherein the direction of movement of the cleaning element towards the vehicle has been depicted.
Figure 6 shows a front view of the cleaning element in the minimum opening position and in the maximum opening position.
Figure 7 shows a profile view of the device in the two positions shown in figure 6.

Below, a list is provided of the different elements represented in the figures making up the invention:
1. Base
2. Drive shaft
3. Guide
4. Movable extender arm
5. Fixed extender arm
6. Drive
7. Part
8. Movable hub
9. Fixed hub
10. Movable support
11. Rim with maximum diameter
12. Rim with minimum diameter
13. Cleaning assembly
14. Additional extender arm
15. Support arm
16. Main cleaning element
17. Secondary cleaning element
a. Movement of the cleaning elements towards the vehicle
b. Fixed height from the outer limit of the cleaning elements to the ground, regardless of the diameter of the scrubbing area
c. Height of the drive shaft corresponding with the maximum opening position with the maximum diameter of the cleaning assembly
c'. Variable height of the drive shaft corresponding with the minimum opening position with the minimum diameter of the cleaning assembly

### DESCRIPTION OF AN EXAMPLARY EMBODIMENT OF THE INVENTION

The present invention should not be limited by the embodiment described herein. Other configurations may be carried out by those skilled in the art based on the present description. Accordingly, the scope of the invention is defined by the following claims.

The device comprises a base (1) with at least one guide (3) wherein a movable extender arm (4), which is part of a first scissor mechanism, moves. This first scissor mechanism also comprises a fixed extender arm (5), joined to the base (1) at a fixed point, with the capacity to rotate around said fixed point. The movable extender arm (4) and the fixed extender arm (5) are linked at an intermediate point around which they are articulated to one another.

Position detectors, which are preferably photocells, may also be arranged in the base (1). The detectors are configured to determine the position of the movable extender arm (4). A drive shaft (2) is moved, more preferably said drive shaft (2) is rotated, by means of a drive (6) of the device, and the movement of the first scissor mechanism is caused by means of the rotation of said drive shaft (2). The drive (6) can be controlled by the position detectors, if they are present.

A central cleaning element (16) which rotates when the drive shaft (2) rotates is arranged at the end of the drive shaft (2). The central cleaning element (16) is part of a cleaning assembly (13) which also comprises secondary cleaning elements (17).

The first scissor mechanism is configured to move the drive shaft (2) at least in a direction parallel to the ground, increasing or decreasing the distance between the drive shaft (2) and the ground such that it positions the drive shaft (2) facing the centre of the rim (thereby adapting to the height of the centre of the rim).

Likewise, the device comprises a second scissor mechanism which moves in a synchronised and dependent manner with respect to the first scissor mechanism and is linked to the drive shaft (2). It is configured to increase or decrease the diameter of the cleaning assembly (13) by means of moving the secondary cleaning elements (17) in a direction perpendicular to the drive shaft (2).

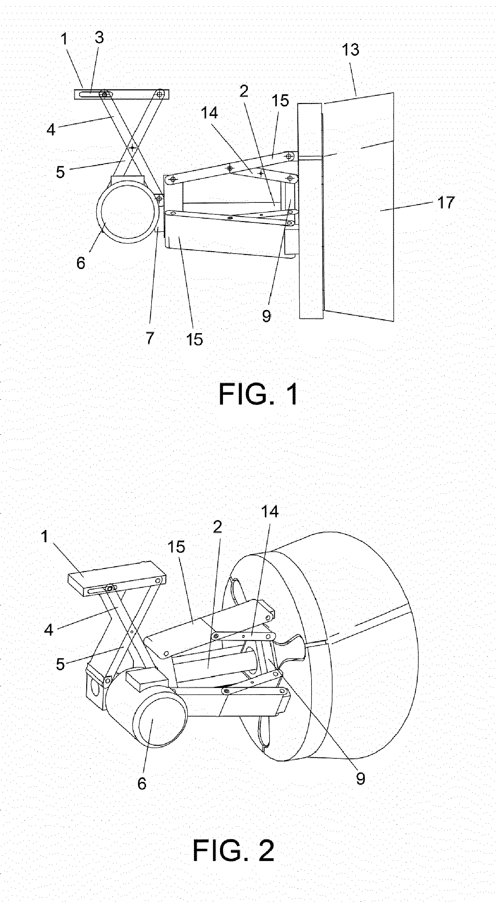

Figures 1 and 2 depict the device for washing wheels in a minimum opening position, wherein the cleaning assembly (13) has the smallest diameter possible. It corresponds with the position that is suitable for cleaning small wheels (rims). As seen in said figures, the first scissor mechanism is fully extended. In other words, the drive shaft (2) is in a position as close as possible to the ground. Likewise, it shows how the second scissor mechanism is in the maximum collapsed position.

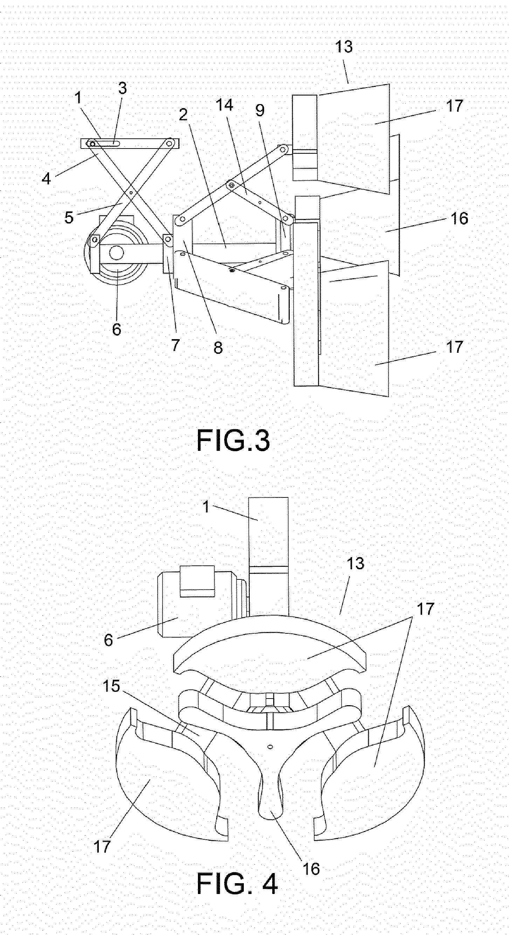

Figures 3 and 4 depict the device for washing wheels in a maximum opening position, wherein the cleaning assembly (13) has the largest diameter possible. It is the position suitable for cleaning large wheels (rims). In this case, the first scissor mechanism is completely collapsed, such that the drive shaft (2) is as far as possible from the ground, and the second scissor mechanism is extended, increasing the diameter of the cleaning assembly (13).

The drive (6) can be assembled in a drive support to which the fixed extender arm (5) of the first scissor mechanism is joined in an articulated manner. The drive (6) is linked to a drive shaft (2) in order to actuate or brake a rotational movement of said drive shaft (2). Likewise, the drive shaft (2) is joined to the first scissor mechanism which, when moved, moves the drive shaft (2) closer to or away from the ground. The second scissor mechanism is also joined to the drive shaft (2) such that the position of the second scissor mechanism is modified with the rotation of the drive shaft (2).

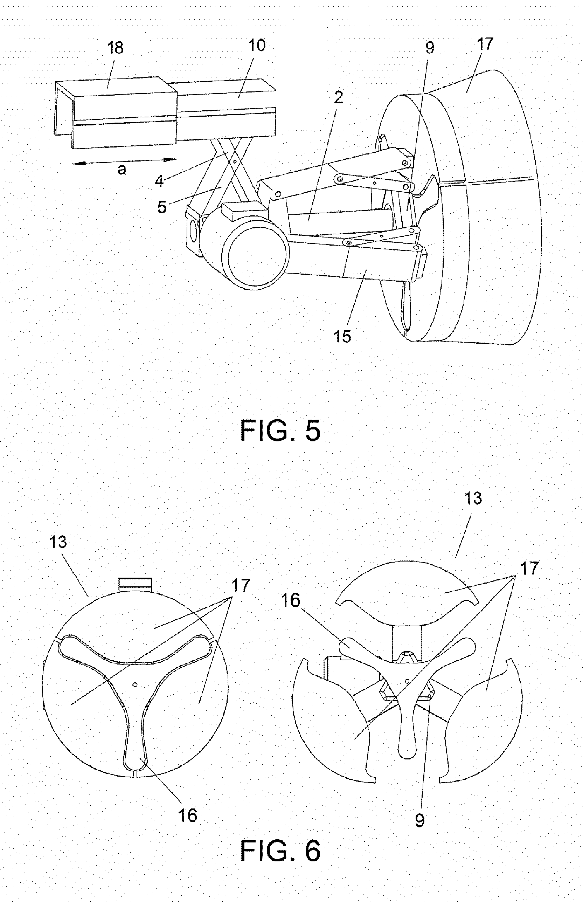

Figure 5 depicts the direction of movement of the cleaning elements towards the vehicle (a). In this specific embodiment shown in figure 5, the scissor mechanism comprises a first movable support (10) inside which the base (1) is arranged, and said first movable support (10) is capable of moving with respect to a second support (18) along the inside of said second support (18). In this case, both the movable extender arm (4) and the fixed extender arm (5) move, both assembled on the movable support (10). Additionally, the movable extender arm (4) moves along the guide (3), assembled in the movable support (10), with respect to the fixed extender arm (5) in order to perform the movement for collapsing or extending the scissor mechanism.

The drive shaft (2) may comprise at least one threaded section on which a part (7) moves which, if the drive shaft (2) comprises a threaded section, would be a threaded part. The part (7) is anchored to the movable extender arm (4) and to a movable hub (8) in turn connected to at least one support arm (15) that swings with respect to said movable hub (8). The support arm (15) or support arms (15) are part of the second scissor mechanism and are joined at the other end thereof to a secondary cleaning element (17) through a secondary cleaning element support.

The swinging movement of the support arm (15) with respect to the movable hub (8) determines the increase or decrease in the diameter of the cleaning assembly. The support arm (15) moves the secondary cleaning element support in a direction transverse to the drive shaft (2), modifying the washing diameter.

Figure 6 shows the end diameters of the cleaning assembly (13). It can be seen how the cleaning surface varies as a result of the movement of the secondary cleaning elements (17) with respect to the drive shaft (2). In a preferred example of the invention, the device comprises, as depicted in this figure 6, three secondary cleaning elements (17), but it could comprise only two of said elements. In this case, as the rotation expands, an elliptical outline which is not preferred, but which also works correctly, would be circumscribed.

The second scissor mechanism also comprises additional extender arms (14) joined in an articulated manner to the support arms (15) and joined to a fixed hub (9) linked to the drive shaft (2).

Therefore, when the drive (6) causes the drive shaft (2) to rotate, the part (7) (preferably a nut-type part) moves along the threaded section, causing the first scissor mechanism to extend or collapse (moving the drive shaft (2) closer to or away from the ground). At the same time, the movable hub (8) which is connected to the part (7) moves forced by the movement of the part (7), causing the articulated movement of the support arms (15), the second scissor mechanism extending or collapsing (increasing or decreasing the diameter of the cleaning assembly (13)).

Therefore, the adaptation to the diameter of the wheel, the compensation for the height of the drive shaft (2), and the rotation of the cleaning assembly (13) for cleaning the rim are performed with a single, preferably a rotary-type, drive (6).

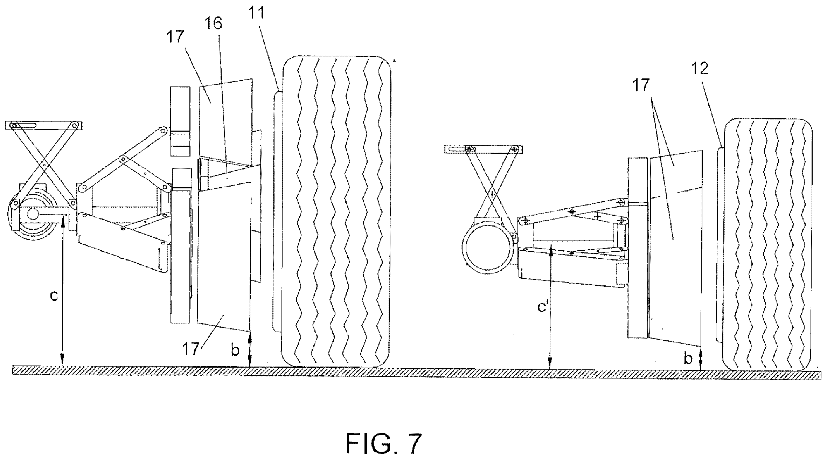

Figure 7 depicts a side view of the device for washing wheels facing a large wheel and a small wheel. As seen, in both cases the position of the drive shaft (2) with respect to the ground and the diameter of the cleaning assembly (13) are regulated in a synchronised manner. The figure on the left depicts the device cleaning a rim with maximum size (11) and the figure on the right depicts the device cleaning a rim with minimum size (12).

Said figure 7 also depicts the fixed height from the outer limit of the cleaning elements (17) to the ground (b) (regardless of the cleaning area). Said height is independent from the diameter of the scrubbing area (i.e., from the diameter of the cleaning assembly (13) at any time) as seen for the two cases that have been depicted. Moreover it have been indicated the height of the drive shaft corresponding with the maximum opening position (c), of maximum diameter of the cleaning assembly; and the height of the drive shaft corresponding with the minimum opening position (c'), of minimum diameter of the cleaning assembly.

At the end of the drive shaft (2) (the end opposite from the end at which the drive (6) is arranged) a central cleaning element support is arranged whereon a central cleaning element (16), preferably a brush, and more specifically the main brush of the cleaning assembly (13) is assembled. The central cleaning element (16) always maintains the position thereof with respect to the drive shaft (2), it only rotates around itself, around said drive shaft (2).

Likewise, the device comprises a guide support cube which is arranged in an end section of the drive shaft (2). Secondary cleaning element guide rods can be joined in said guide support cube in order to orient the movement of the secondary cleaning elements (17) perpendicular to the drive shaft (14). The guide support can be joined to the central cleaning element support (12).

The change in diameter of the cleaning assembly (13) enables the device to be adapted to the diameter of the rim of the wheel to be cleaned. This size is also related to the distance from the centre of the rim with respect to the ground. The device of the present invention modifies both measurements in a synchronised and dependent manner in order to also control the additional loads supported by the device when it is used for cleaning large wheel rims.

The cleaning elements (16, 17) are cleaning elements which clean by friction, preferably brushes. The secondary cleaning elements (17) orbit around the main (central) cleaning element (16) and are arranged separated from the main cleaning element to a lesser or greater extent depending on the diameter of the cleaning assembly (13) to be obtained (depending on the diameter of the rim of the wheel to be cleaned).

## Claims

1. A device for washing wheels, **characterised in that** it is adaptable to the size of the rim of the wheel to be cleaned depending on the distance from the centre thereof with respect to the ground and on the diameter thereof, and comprises:
- a base (1);
- a drive (6);
- a drive shaft (2) connected to the drive (6) which is joined to a central cleaning element (16) which is part of a cleaning assembly (13) which is also provided with secondary cleaning elements (17);
- a first scissor mechanism, connected to the base (1) and linked to the drive shaft (2), configured to move said drive shaft (2) at least in a direction parallel to the ground, increasing or decreasing the distance between the drive shaft (2) and the ground such that it positions the drive shaft (2) facing the centre of the rim;
- a second scissor mechanism, connected to the secondary cleaning elements (17) and linked to the drive shaft (2), configured to increase or decrease the diameter of the cleaning assembly (13) by means of moving the secondary cleaning elements (17) in a direction transverse to the drive shaft (2);
wherein the first scissor mechanism and the second scissor mechanism move in a synchronised and dependent manner forced by the movement of the drive shaft (2).

2. The device for washing wheels according to claim 1, wherein the first scissor mechanism comprises a fixed extender arm (5), joined at one end to a fixed point of the base (1) with rotational capability, and a movable extender arm (4) with an end that is movable along a guide (3) arranged in the base (1), wherein the fixed extender arm (5) and the movable extender arm (4) are articulated to one another through a joining point and are linked to the drive shaft (2).

3. The device for washing wheels according to claim 2, wherein the drive shaft (2) comprises at least one threaded section on which a part (7), to which the movable extender arm (4) is joined, moves such that the movement of said part (7) around the drive shaft (2) determines a longitudinal movement of the movable extender arm (4) with respect to the fixed extender arm (5) whereby the drive shaft (2) moves closer to or away from the ground.

4. The device for washing wheels according to any one of the preceding claims, wherein the fixed extender arm (5) is joined in an articulated manner to a drive support wherein the drive (6) is arranged.

5. The device for washing wheels according to any one of the preceding claims, wherein the second scissor mechanism comprises support arms (15) at the end of which a secondary cleaning element (17) is arranged and which are movably linked to the drive shaft (2) with respect to which it can swing; and comprises additional extender arms (14) joined in an articulated manner to the support arms (15) and linked in a fixed manner to the drive shaft (2).

6. The device for washing wheels according to claim 5, wherein the support arms are linked to the drive shaft (2) through a movable hub (8) which is in turn joined to the nut (7) such that, when the nut (7) moves in the threaded section, the movable hub (8) moves along with it, articulating the movement of the support arms (15), moving the secondary cleaning elements (17) in a direction transverse to the drive shaft (2), modifying the diameter of the cleaning assembly (13).

7. The device for washing wheels according to any one of claims 5 to 6, wherein the additional extender arms (14) are linked to the drive shaft (2) through a fixed hub (9) joined thereto.

8. The device for washing wheels according to any one of the preceding claims, comprising a guide support cube arranged in an end section of the drive shaft (2).

9. The device for washing wheels according to claim 8, comprising guide rods of secondary cleaning element which are joined to the guide support cube and joined to supports of secondary cleaning elements (13).

10. The device for washing wheels according to claim 8, wherein the guide support is joined to a central cleaning element support (12) and to which the central cleaning element (16) is in turn joined.
